# EUROPEAN PATENT APPLICATION

(11) **EP 1 069 788 A2**
(43) Date of publication of application: **17.01.2001**
(21) Application number: 00303575.5
(22) Date of filing: 27.04.2000
(51) Int. Cl.: H04Q 3/545

(54) **A method of issuing passwords**

(30) Priority: 29.06.1999 US 342357
(71) Applicant: Nortel Networks Limited, Montreal, Quebec H2Y 3Y4 (CA)
(72) Inventor: Gray, Gary, Bracknell, Berkshire RG42 3XP (GB); Baker, Guy James, Bracknell, Berkshire RG42 3XP (GB); Worringham, John Edward Peter, Orange Park, London N21 1DY (GB); Mitchell, Jonathan, Hertfordshire EN5 5HW (GB)
(74) Representative: Laurence, Simon French

(57) **Abstract**

A method of issuing passwords is described where each password is associated with a specified unique entity. For example, an entity may be a site or switch in a communications network and the passwords may be required to enable a software patch to be installed on that switch. A database of details of each entity is stored and a manager is able to modify this database to indicate whether a password may be issued for a particular software patch and switch. A web interface is provided via which requests for passwords are made and an email engine provides email responses to the requests. Details of the requests are stored in the database and a manager is able to obtain information from the database using the web interface. This information enables the manager to control and monitor passwords that are issued and to detect misuse of the system or potential unauthorised password access.

## Description

### Background of the Invention

### Field of the Invention

This invention relates to a method of issuing passwords and in particular, but not limited to a method of issuing passwords to enable users to install software on telecommunications switches. The invention also relates to a computer program for implementing this method and to a computer system arranged to provide the method.

### Description of the prior art

Telecommunications switches such as the Nortel Networks (trade mark) proprietary DMS 100 family of switches are typically updated to meet particular customer requirements using so called "software patches". These software patches are pieces of computer software that are created to add to the functionality of the software on a switch and perhaps to solve particular problems. Typically, software patches are created for particular situations and are only designed to cope with these situations. Later when a full software upgrade is undertaken by issuing a new release or version of the software to control a switch then any patches previously used are not required because they are taken account of in the upgrade.

One problem has been that unauthorised installation of software patches has taken place. This not only results in a loss of revenue but also creates many other problems. For example, if a software patch is installed in an unauthorised location it may not be suitable for that location and this often results in malfunction. Another problem is that providers of the switch software are usually unaware when an unauthorised software patch has been installed at a particular location. The providers of the switch software, during the next software upgrade, are then unable to properly take into account the presence of the software patches. This leads to problems and potential delays in the software upgrade.

A maintenance contract is usually set up whereby the software provider agrees to address problems and errors that may occur in the switch software. If an error occurs as the result of unauthorised installation of a software patch, the software provider still has to identify that this is the case before pointing out that the terms of the maintenance contract may have been breached. This is wasteful of resources and time consuming. Also evidence that the installation of the software patch was unauthorised often needs to be provided but this may be difficult and time consuming to identify.

Previously, software patches have been delivered to customers using an elementary form of protection. Passwords have been required in order to allow a particular software patch to become operational. These passwords have typically been formed from information about the particular software patch, the customer's identity and the particular switch involved. However, use of these passwords has been abused and it has been difficult to maintain control over issuing of passwords and to ensure that up to date and accurate information about password access is available quickly and easily. As well as this it has been difficult to quickly identify unauthorised access to passwords and to track this unauthorised access in order to take appropriate action.

The problems discussed above with respect to issuing passwords for software patch installation also apply to other situations where it is required to issue passwords.

It is accordingly an object of the present invention to provide an improved method of issuing passwords which overcomes or at least mitigates one or more of the problems noted above.

### Summary of the Invention

Further benefits and advantages of the invention will become apparent from a consideration of the following detailed description given with reference to the accompanying drawings, which specify and show preferred embodiments of the invention.

According to the present invention there is provided a method of issuing passwords, each password being associated with a specified, unique, entity, said method comprising the steps of:-
(i) storing information about entities for which passwords may be issued;
(ii) receiving a request for a password associated with a given entity; and
(iii) if the password request is made for an entity for which there is stored information indicating that a password may be issued, then issuing the requested password.

A corresponding computer system is provided for issuing passwords, each password being associated with a specified, unique, entity, said computer system comprising:-
(i) a memory arranged to store information about entities for which passwords may be issued;
(ii) an input arranged to receive a request for a password associated with a given entity; and
(iii) a processor arranged to issue the requested password if the password request is made for an entity for which there is stored information indicating that a password may be issued.

A corresponding computer program is provided stored on a computer readable medium, said computer program being arranged to control a system for issuing passwords, each password being associated with a specified, unique, entity, said computer program being arranged to control said system for issuing passwords such that:-
(i) information about entities for which passwords may be issued is stored;
(ii) a request for a password associated with a given entity is received; and
(iii) if the password request is made for an entity for which there is stored information indicating that a password may be issued, then the requested password is issued.

This provides the advantage that a customer's request for a password is only granted under certain conditions which may be controlled by an operator. For example, an entity may be a switch in a telecommunications network and the operator is able to control the stored information about switches for which passwords may be issued. This method of issuing passwords may be centralised. A fast password request process is provided which gives a high level of control over password issuing and which is easy to maintain.

Preferably the method described above further comprises the step of storing information about the request. This provides the advantage that the information about the request can be analysed later by a user of the password issuing system. This helps to quickly identify unsuccessful and potentially unauthorised use of the password issuing system.

Preferably each password is further associated with a piece of computer software. For example, the piece of computer software may be a software patch for a switch in a telecommunications network.

Preferably the method is repeated a plurality of times and further comprises the step of presenting information about identical requests. If identical or duplicate requests are made this is an indication of potential misuse of the password issuing system. By presenting information about this a manager of the password issuing system is quickly able to identify potential misuse and to take appropriate action.

### Brief description of the drawings

Figure 1 is a flow diagram of a method for enabling a patch for a specific site.
Figure 2 is a flow diagram of a method for requesting a pre-enabled password.
Figure 3 is a flow diagram of a method for requesting a pre-enabled password for a site for which information is already available.
Figure 4 is a flow diagram of a method for requesting a non-enabled password.
Figure 5 is a flow diagram of a method for enabling a captive site.
Figure 6 is a flow diagram of a method for requesting a password for a captive site.
Figure 7 is a flow diagram of a method for querying which sites a patch has been requested for.
Figure 8 is a flow diagram of a method for querying who has requested a patch.
Figure 9 is a flow diagram of a method for querying site status.
Figure 10 is a flow diagram of a method for listing illegal requests.
Figure 11 is a flow diagram of a method for modifying site information.
Figure 12 is a flow diagram of a method for updating a notification list.
Figure 13 shows a computer system for issuing passwords.

### Detailed description of the invention

Embodiments of the present invention are described below by way of example only. These examples represent the best ways of putting the invention into practice that are currently known to the Applicant although they are not the only ways in which this could be achieved.

An example of a password issuing system for software patches is now described. Each software patch is provided with code which requests a password from a user and checks this password before allowing that patch to become operational. Any suitable method for generating and checking passwords may be used as is known in the art. For example each password may be formed using information about a customer's identity, a unique site at which the software patch is to be used, and the particular software patch involved. The method of forming the password is "known" by the software patch and this enables the software patch to check that a password given by the user is correct.

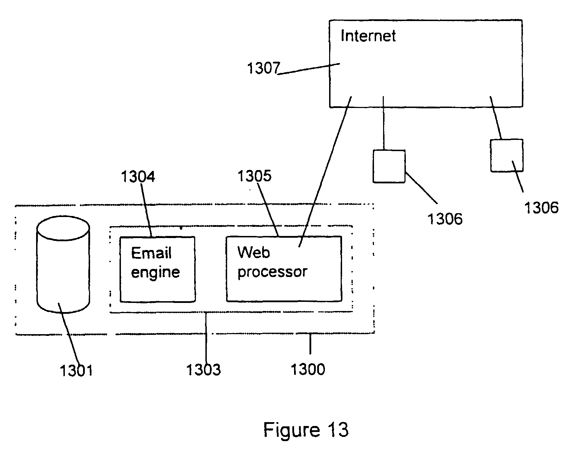

The password issuing method is implemented using a computer system. Figure 13 shows a computer system 1300 for issuing passwords, each password being associated with a specified, unique, entity, said computer system comprising:-
(i) a memory 1301 arranged to store information about entities for which passwords may be issued;
(ii) an input 1302 arranged to receive a request for a password associated with a given entity; and
(iii) a processor 1303 arranged to issue the requested password if the password request is made for an entity for which there is stored information indicating that a password may be issued.

Any suitable form of memory 1301 may be used, for example an SQL database. Information may also be stored in the memory as text files if required although this may result in slow response times. In a preferred embodiment a mySQL database is used which is low cost and is operable on Unix and NT platforms.

The processor 1303 comprises an email engine to return passwords to the requester and to notify a software provider. As well as this a web interface 1305 is provided to provide a means by which requesters can interact with the password issuing system. The web interface 1305 is connected to a communications network such as the Internet 1307 from which terminals 1306 are provided. Any suitable form of processor 1303 may be used. For example the email engine and system for interacting with and controlling the database may be implemented on a Sun Server and the web interface on an Apache Web Server or a Microsoft IIS server.

To request a password a user accesses the web interface 1305 via a terminal 1306 and enters details about the user's identify, site at which a software patch is require, and the identity of the particular software patch that is required. A record of each software patch is kept in a database 1301 and a software operator provides information about which software patches may be used for particular sites. This information is recorded in the database 1301 and a processor 1304 checks this information to determine whether a password may be issued. If so, a password is generated, issued and emailed to the requester using email engine 1304. Any suitable method for generating the password may be used. For example, the password may be generated from information about the particular software patch, customer identity and site at which the software patch is to be installed. For example, the patch ID, customer ID and site CLLI. An email message is also sent to the software operator to notify him/her that a password has been issued and to provide details about the issued password. If the processor 1304 determines that a password may not be issued, an email message to this effect is sent to the requester and also to the software operator.

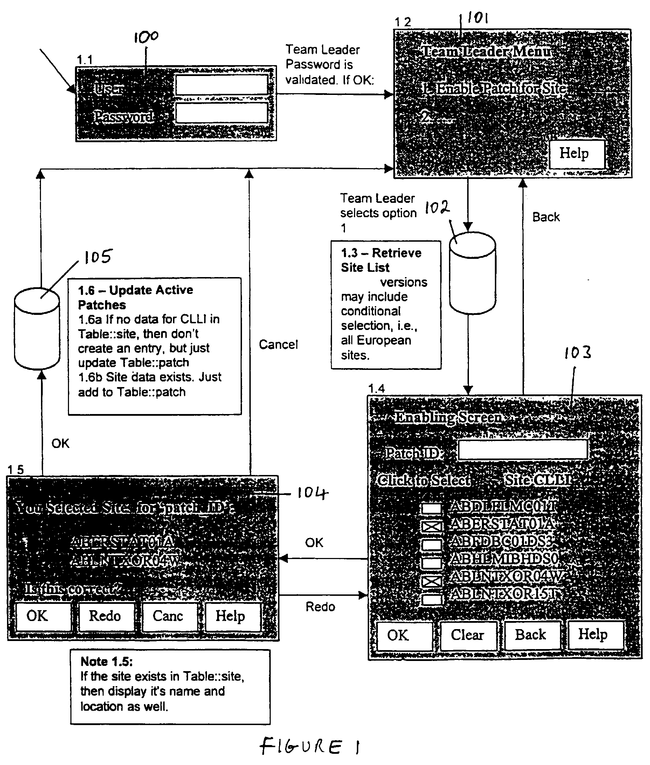

A number of flow diagrams (Figures 1 to 12) are now described which illustrate different aspects of a password issuing system. In these figures a symbol in the form of a cylinder is used to represent database 1301 and a symbol comprising a rectangle containing short horizontal lines is used to represent an email message. Rectangles with grey shading are intended to illustrate examples of screen displays provided on the web interface 1305. Each screen display provided on the web interface 1305 is preferably provided with an associated "help" screen (not shown) which provides instructions to a user about how to use the web interface and which provides contact details for the software provider. Figures 1, 5, 7, 8, 9, 10, 11 and 12 represent methods that are available to the software operator only and which are not intended to be accessed by customers. For example, this can be achieved by password protecting certain parts of the web interface 1305 to prevent access by non-authorised users.

Figure 1 is a flow diagram of a method for enabling a patch for a specific site. The software provider accesses the web interface 1305 and is first presented with a dialog box 100 requesting his or her user name and password. If these user details are validated then a main menu 101 is displayed that is specific for the software provider. From this main menu 101 the software provider is able to select an option to "enable a patch for a site". A list of all possible sites (for example these may be switches in a telecommunications network) is then retrieved 102 from the database 1301. It is also possible to select certain groups of sites at this stage for example, only European sites.

Another display screen 103 is then presented to the software provider via the web interface 1305. This is a so called "enabling screen" via which the software provider is required to enter the identity of the software patch involved and to check boxes against a list of all possible sites, as to which sites should be enabled for the given software patch. Once the software provider has entered the required information he or she selects "OK" and a further display screen 104 is presented. This lists the sites that the software provider selected for the particular software patch and requests acknowledgement from the software provider that this is correct. If so the software provider selects "OK". Information about the name and location of the selected sites may also be presented on this display screen 104 as well as a unique identifier for each of these sites. In another application of the present invention the unique identifier may be that of a Pentium 3 (trade mark) computer processor.

Information about which sites the software provider has "enabled" is then stored 105 in the database 1301. The main menu display 101 is then presented again.

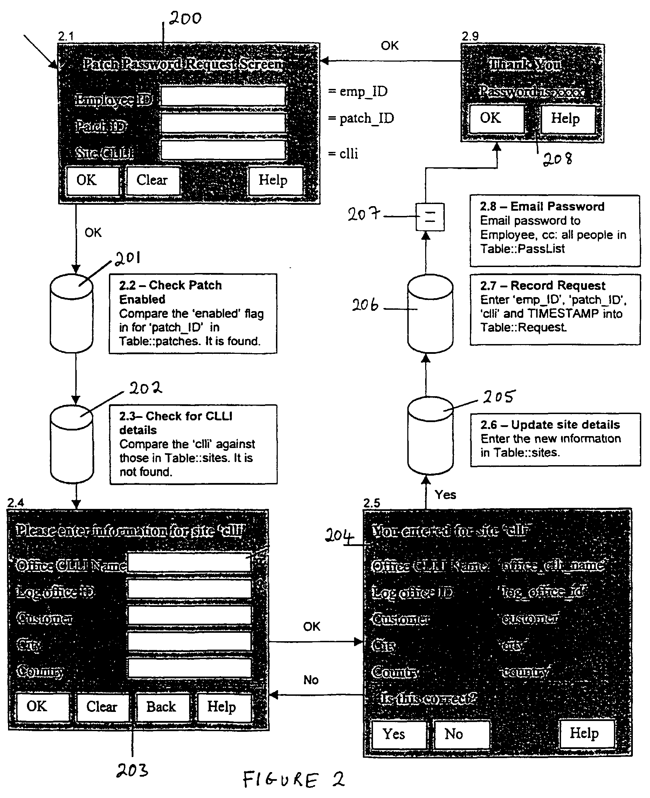

Figure 2 is a flow diagram of a method for requesting a pre-enabled password. In this case a user, for example an employee of the software provider who is on site at a customer location in order to update a customer switch using a software patch, requests a password via the web interface 1305. A patch password request screen 200 is first presented and the employee enters his or her employee identity, details about the software patch involved and a unique identifier for the site (e.g. telecommunications switch).

The employee's identity may then be checked against a list of known employees although this is not essential. If the employee is unknown access to the web interface is restricted.

The database 1301 is then checked 201 to find out whether the requested software patch has previously been "enabled" by the software provider. In this example, the requested software patch has indeed been enabled. A check 202 is then made to find out whether details about the site are given in the database 1301. If not a display screen 203 is presented to the employee requesting these details. For example the requested information can include the customer identity, and address details for the site. Once this information has been entered by the employee, an acknowledgement screen 204 is displayed which lists the information about the site entered by the employee. The employee is requested to check this information and if it is correct the information is stored in the database 1301 (step 205). Details about the request are then recorded in the database 1301 (step 206) and these details include for example, the time when the request was made, who made the request, and which software patch and site the request was in respect of. An email 207 is then sent to the employee to provide the password and the software provider is notified that the password has been provided. A final display screen 208 is then given detailing the password.

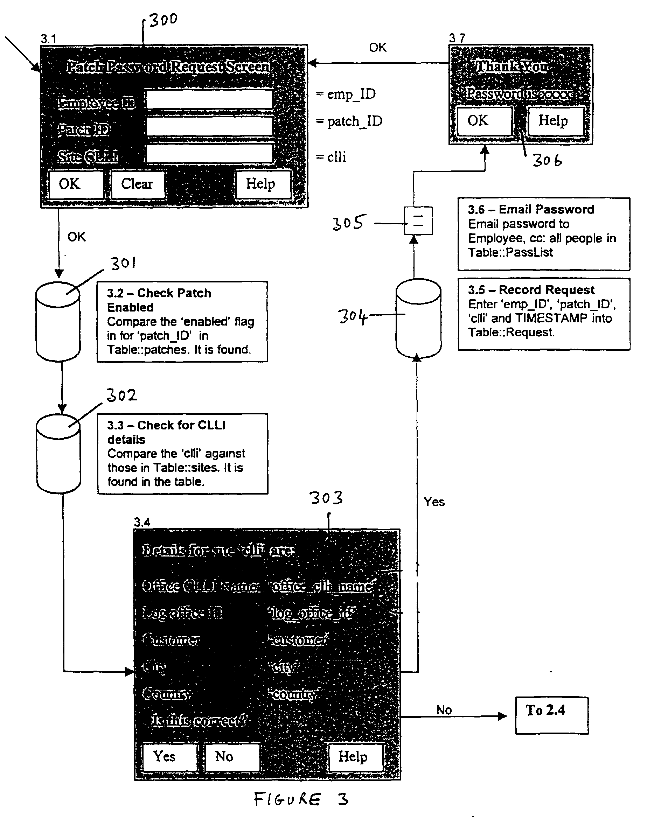

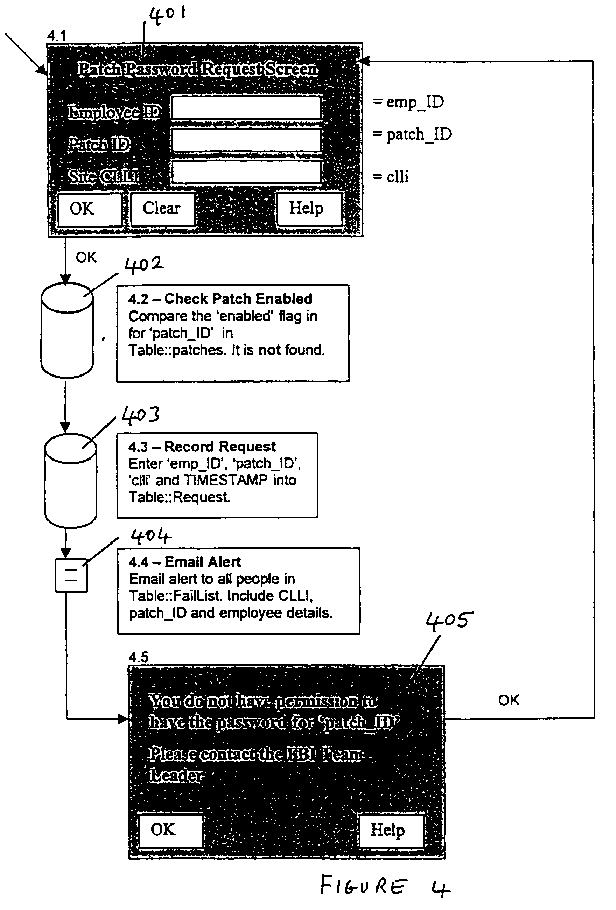

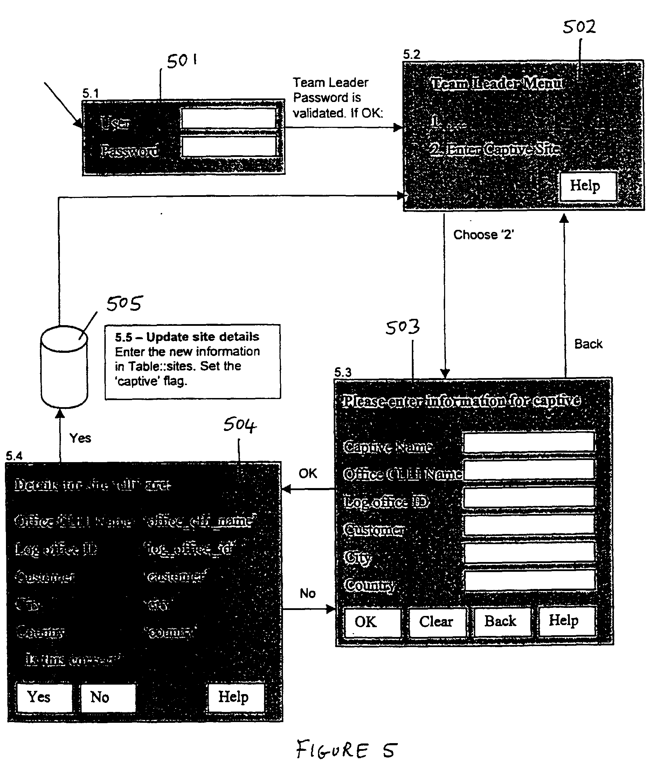

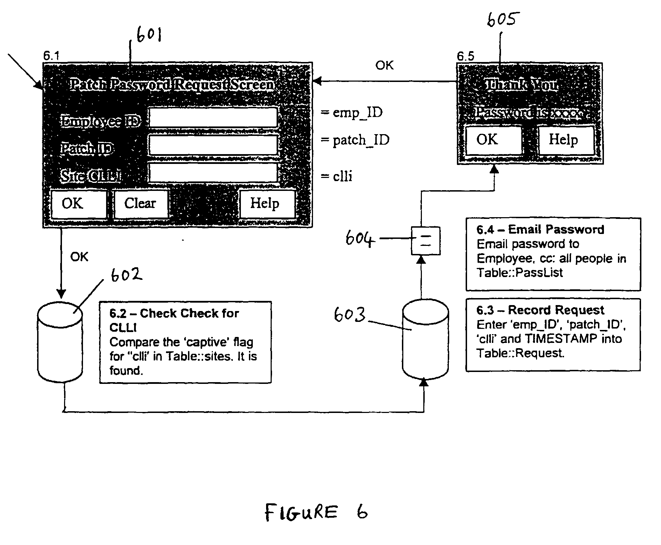

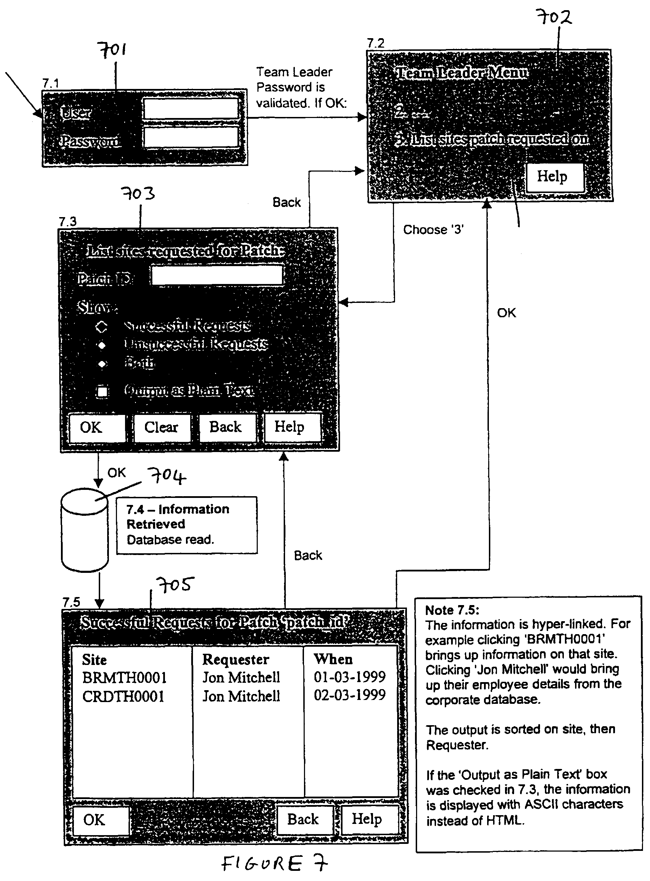

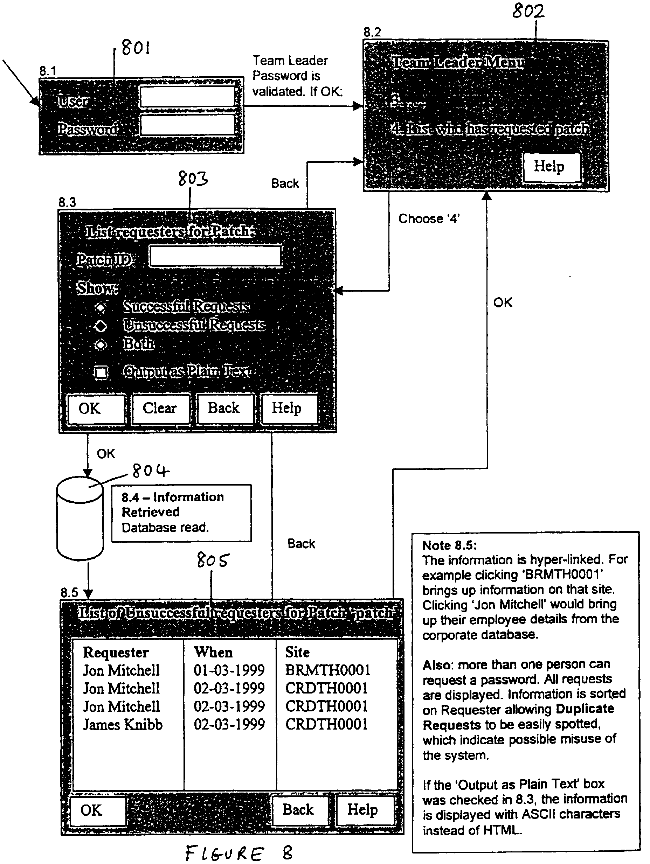

Figure 3 is a flow diagram of a method for requesting a pre-enabled password for a site for which information is already available. This method is very similar to that described in Figure 2. The first three steps 300, 301 and 302 are equivalent to steps 200, 201 and 202 of Figure 2. In this case, details about the site are already stored in database 1301 and these are simply displayed to the employee via display screen 303. The employee is requested to check these and if they are correct steps 304, 305 and 306 ensue which are equivalent to steps 206, 207 and 208 of Figure 2. If the site details are not correct the procedure of steps 203 to 208 is followed.

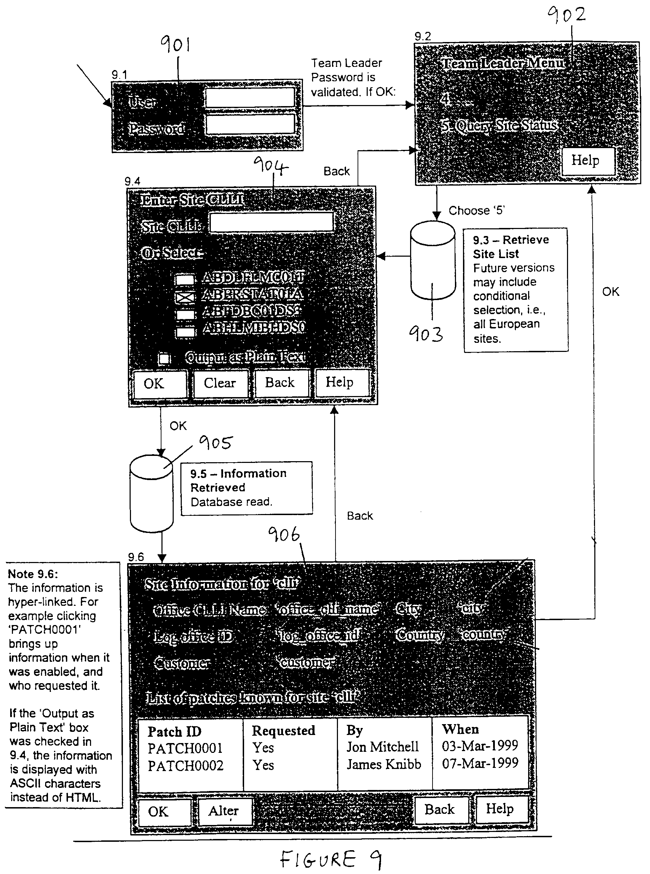

Figure 4 is a flow diagram of a method for requesting a non-enabled password. The first two steps of this method 401, 402 are the same as steps 200 and 201 of Figure 2. Once the password issuing system has identified that the password request cannot be granted (in step 402) then details about the request are recorded 403 in the database 1301. These details include a time at which the request occurred, details about who made the request and which software patch and site the request was for. An email alert is then sent 404 to the software provider and any people that the software provider has included in an email alert list (this is described in more detail below). Finally a display 405 is given which explains to the requester that a password will not be issued because permission has not been granted.

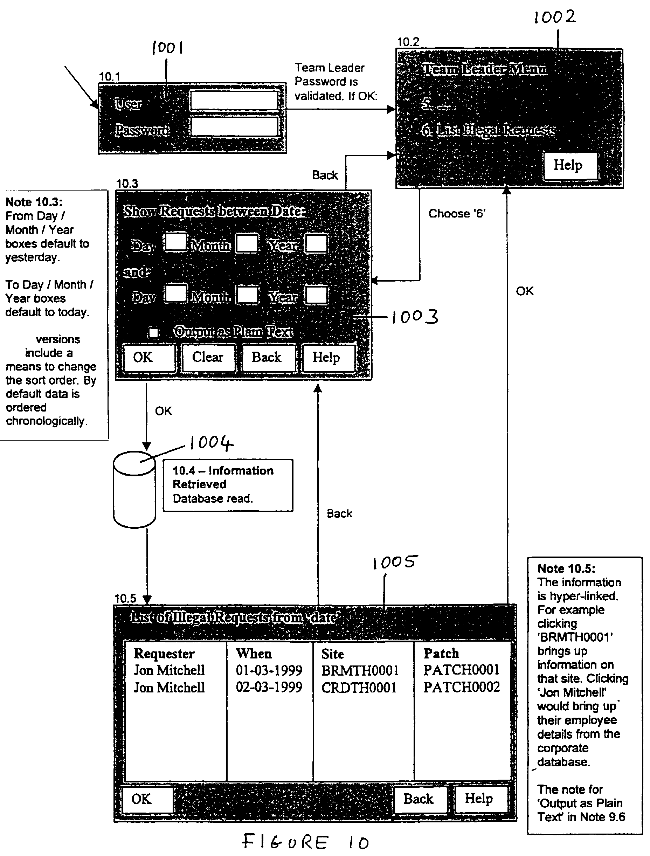

Figure 5 is a flow diagram of a method for enabling a captive site. A captive site is a test site which is used for training and testing purposes. Captive sites are preferably enabled for all software patches and no password is required for each software patch on the captive site. First a display 501 is given requesting the user's (software provider's) identity and password. If these are validated, access to the software provider's main menu 502 is given and the software provider selects an option to enable a captive site. Information about the captive site is then entered via a display screen 503. For example, this may include details about the identity of the captive site, which customer has the captive site and details about the geographical location of the site. A display screen 504 is then given which lists these details about the captive site for the software provider to check. If the details are correct the information is stored 505 in the database 1301 and the software provider's main menu is redisplayed 502.

Figure 6 is a flow diagram of a method for requesting a password for a captive site. An employee accesses the web interface and selects an option to request a password for a captive site. A display screen 601 is given that is the same as screen 201 given in Figure 2. The employee enters the requested information and a check is made that the employee is known. If so, a check 602 is made to see if the requested site is a captive site. This is possible because a record is kept in database 1301 which indicates whether each site is a captive site or not. Details about the site are then displayed (not shown in Figure 6) in order that the employee may check that the correct site is being referred to. However, this step is not essential. A record is then made of the request 603 and assuming that the request is successful, an email sent to the employee to provide a password 604. Emails may also be sent to a number of other people indicating that the request has been granted and this is described further below. Finally a display screen 605 is given which indicates the password details.

In the examples discussed above, the user enters details about the software patch, customer and site location for which a password is required. However, it is also possible for this information to be obtained directly from the site, for example a communications switch or an information processor. This is achieved by establishing a communication link between the computer system of the present invention and the communications switch, information processor or other entity. Any suitable type of communication link can be used, for example, an internet connection. By obtaining information from the communications switch or other entity in this way the user information can be checked. Alternatively, the user does not have to enter as much information.

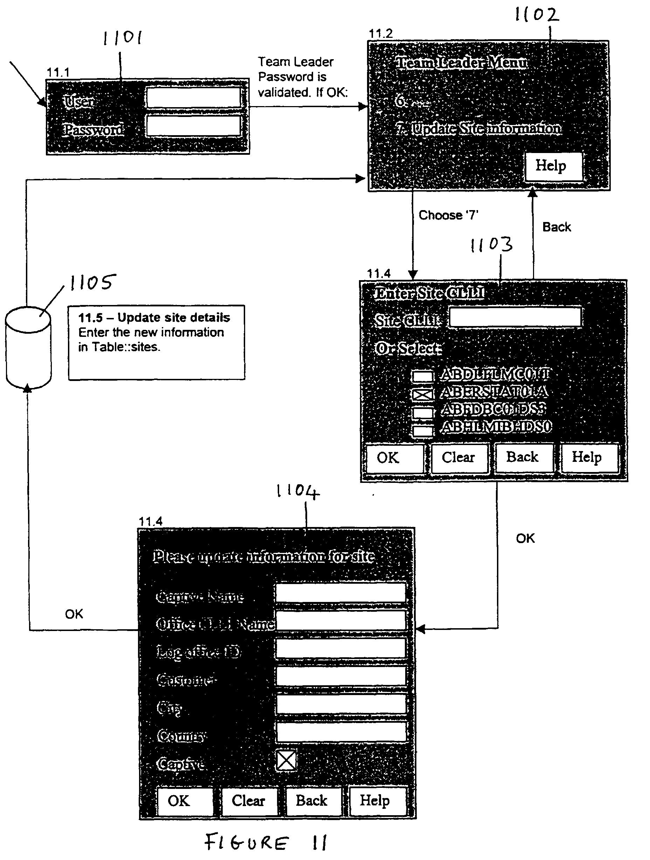

Figures 7, 8, 9 and 10 give examples of queries that the software provider may make to help him or her in management of passwords. For each of these cases the software provider or manager is requested for his or her user name and password via a dialog box 701, 801, 901, 1001 and is then presented with a main menu 702, 802, 902, 1002 provided that their user name and password are validated.

In the method of Figure 7, the manager is able, for a given software patch, to list all the requests for passwords. Via display screen 703 the manager enters details of the software patch and is able to ask for all requests in respect of that patch to be presented or just successful or unsuccessful requests to be presented. The required information is retrieved 704 from the database and presented to the manager in a table-like display 705. The information in the table-like display may be hyperlinked. That is, by selecting a particular site in the display full details for that site may be presented. Similarly, selecting details about a particular employee requester results in full details about that employee being presented.

Figure 8 illustrates a similar method for listing all those employees who have requested a particular software patch. This enables the same information that was presented in the method of Figure 7 to be presented again but in a different format. It is possible for more than one person to make a request for the same password but this should not often be necessary. The presence of duplicate requests is therefore a potential indicator of misuse of the password issuing system. The display of 805 is particularly useful to enable the manager to quickly identify duplicate requests in order that action can be taken to stop the possible misuse.

Figure 9 illustrates a method for querying site status. When an option for this method is selected from the main menu 902 information about all the sites is retrieved 904 from database 1301. The manager is then requested to specify the site for which he or she requires information. This is done using display screen 904. Information about the requested site is retrieved 905 from the database 1301 and displayed using display screen 906. The information in display screen 905 may be hyperlinked in order that clicking on items in this display screen causes full information about that item to be displayed. This method for querying site status is particularly advantageous because it enables the manager to check details for particular sites quickly and easily for example, when planning upgrades and in response to customer queries.

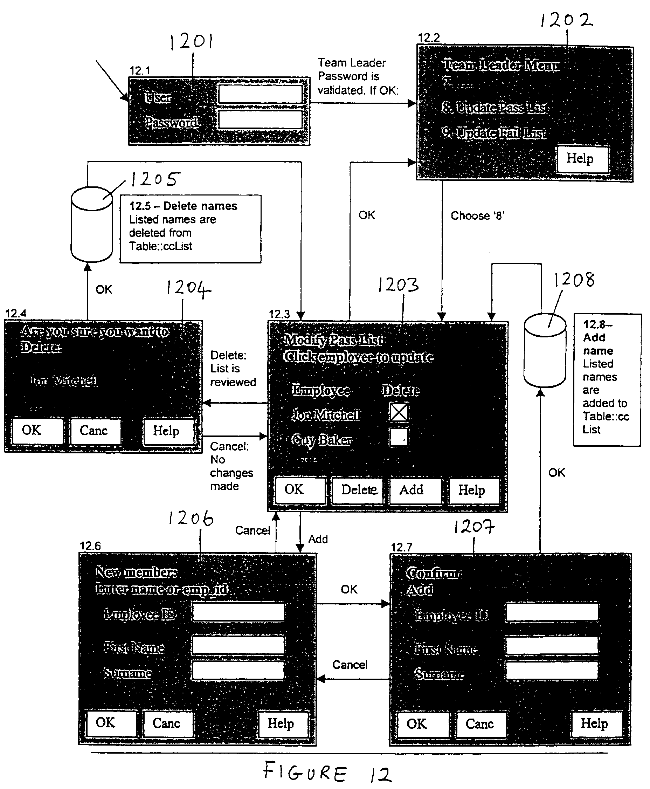

Figure 10 illustrates a method for listing "illegal" or "unsuccessful" requests. A dialog box 1003 is given in which the manager enters time limits between which he requires information about unsuccessful requests. Default values for these time limits are used in the case that the manager does not enter any time limits. It is also possible for the manager to specify how he wishes the required data to be sorted, for example, in chronological order or by site order. The requested information is retrieved 1004 from the database 1301 and presented in a table-like display 1005. Information in this display 1005 is hyperlinked as for display 906 in Figure 9. This method is very useful to enable the manager to identify potentially fraudulent use of software patches and to analyse information about this.

Figure 11 describes a method by which the manager may update information about a particular site. User details and password are requested for the manager as for Figure 10 and the option of updating site information is selected from the main menu 1102. A display screen 1103 is given in which the manager indicates which site he requires to update the information for. The updated information is then entered by the manager using dialog box 1104 and this information stored 1105 in the database 1301.

Other methods similar to those of Figures 7 to 10 are provided which enable the manager to list all patches requested by an individual employee, list patches requested for a particular site and list sites for which a particular patch has been requested. Given the information stored in the database queries may be performed on that database to present information required by the manager.

Two notification lists are stored. One is termed a "pass list" and contains a list of people who should be notified when a password is successfully requested. The other is termed a "fail list" and contains a list of people who should be notified when a password is unsuccessfully requested. The main menu 1202 contains options for updating these lists. Figure 12 describes the method for updating the pass list; however the method for updating the fail list is equivalent for all practical purposes.

Once the manager has reached the main menu 1202 and selected the option to update the pass list a dialog box 1203 is presented containing a list of employees. The manager checks or checks boxes against the list of employees to indicate any employees who should be deleted from the pass list. A display screen 1204 is then given requesting the manager to confirm his delete request. The required entry(ies) are then deleted 1205 from the pass list and the display 1203 is represented.

In the case that the manager requires to add to the pass list, an option to add is selected from display screen 1203 and a dialog box 1206 presented in which details about who to add are entered. The manager is asked to confirm these details via display screen 1207 and if confirmed the new details are added 1208 to the pass list. The display screen 1203 is then represented.

In event of problems with the password issuing system, such as a fault in the processor 1300 a bypass facility is provided. This enables the manager to issue passwords independently of the password issuing system. However, details of passwords issued in this way are stored in the database. Access to the bypass facility is restricted to the managers of the password issuing system only.

A range of applications are within the scope of the invention. These include situations in which it is required to issue passwords for specified entities. For example, when passwords are required installation of software patches on switches in a telecommunications network.

## Claims

1. A method of issuing passwords, each password being associated with a specified, unique, entity, said method comprising the Steps of:-
(i) storing information about entities for which passwords may be issued;
(ii) receiving a request for a password associated with a given entity; and
(iii) if the password request is made for an entity for which there is stored information indicating that a password may be issued, then issuing the requested password.

2. A method as claimed in claim 1 which further comprises the step of creating the requested password.

3. A method as claimed in claim 2 wherein the password is created using information about the specified, unique entity.

4. A method as claimed in claim 1 which further comprises the step of storing information about the request.

5. A method as claimed in claim 4 wherein said information about the request comprises information about the result of the request.

6. A method as claimed in claim 1 wherein each password is further associated with a piece of computer software.

7. A method as claimed in claim 6 which further comprises the step of storing information about which pieces of computer software passwords may be issued in respect of.

8. A method as claimed in claim 7 wherein said request is for a password associated with a given entity and a given piece of computer software.

9. A method as claimed in claim 8 wherein said step (iii) further comprises the condition that the requested password is only issued if its associated given piece of computer software is one for which there is stored information indicating that a password may be issued.

10. A method as claimed in claim 1 which further comprises the step of storing additional information about entities for which passwords may be issued.

11. A method as claimed in claim 6 which further comprises the step of storing additional information about pieces of software for which passwords may be issued.

12. A method as claimed in claim 4 which is repeated a plurality of times and which further comprises the step of presenting information about identical requests.

13. A method as claimed in claim 1 wherein said entities are nodes in a communications network.

14. A method as claimed in claim 1 wherein if a request for a password is received but the requested password is not issued then a message is sent to an operator.

15. A computer system for issuing passwords, each password being associated with a specified, unique, entity, said computer system comprising:-
(i) a memory arranged to store information about entities for which passwords may be issued;
(ii) an input arranged to receive a request for a password associated with a given entity; and
(iii) a processor arranged to issue the requested password if the password request is made for an entity for which there is stored information indicating that a password may be issued.

16. A computer system as claimed in claim 15 wherein said input comprises a user interface provided on a web site.

17. A computer program stored on a computer readable medium, said computer program being arranged to control a system for issuing passwords, each password being associated with a specified, unique, entity, said computer program being arranged to control said system for issuing passwords such that:-
(i) information about entities for which passwords may be issued is stored;
(ii) a request for a password associated with a given entity is received; and
(iii) if the password request is made for an entity for which there is stored information indicating that a password may be issued, then the requested password is issued.

18. A method of issuing passwords using an information processor, each password being associated with a specified, unique, entity, said method comprising the steps of:-
(i) storing information about entities for which passwords may be issued in a memory;
(ii) receiving a request for a password associated with a given entity; and
(iii) using an information processor, determining whether the password request is made for an entity for which there is stored information indicating that a password may be issued, and if so, then issuing the requested password.

19. A method of operating a computer system for issuing passwords, each password being associated with a specified, unique, entity, said method comprising the steps of:-
(i) causing a memory arranged to store information about entities for which passwords may be issued to be accessed;
(ii) making a user input to request a password associated with a given entity; and
(iii) causing a processor to issue the requested password if the password request is made for an entity for which there is stored information indicating that a password may be issued.
